# EUROPEAN PATENT APPLICATION

(11) **EP 4 749 499 A1**
(43) Date of publication of application: **27.05.2026**
(21) Application number: 25217193.9
(22) Date of filing: 20.11.2025
(51) Int. Cl.: G06F 21/62, G06F 16/35, G06F 16/355, G06F 21/74, G06F 40/20, G06F 40/284, G06F 40/40, H04L 9/40

(54) **SECURITY AGAINST IDENTITY THEFT IN GENERATIVE ARTIFICIAL INTELLIGENCE APPLICATIONS**

(30) Priority: 26.11.2024 US 202418961049
(71) Applicant: Intuit Inc., Mountain View, CA 94043 (US)
(72) Inventor: ROSKACH, Andrei, Mountain View, 94043 (US); RABIN, Yoni, Mountain View, 94043 (US); HABLER, Idan, Mountain View, 94043 (US); SHTAR, Guy, Mountain View, 94043 (US)
(74) Representative: D Young & Co LLP

(57) **Abstract**

Security against identity theft in generative artificial intelligence applications includes receiving, from a user computing device, an online user prompt to a large language model (LLM), the online user prompt associated with a user identifier, tokenizing the online user prompt to generate a target set of tokens, and tagging each token in the target set based on parts of speech to obtain a tagged target set. Security further includes processing, by a vector embedding model, the tagged target set to generate multiple vector embeddings, processing, by a sequential model, the vector embeddings to generate a target vector, processing, by an anomaly detection model using or trained with a signature of the user identifier, the target vector to detect whether user impersonation exists. Security further includes blocking, in real time with receiving the online user prompt, access to the LLM based on detecting that user impersonation exists.

## Description

### BACKGROUND

Artificial intelligence (AI) systems are increasingly integrated into diverse enterprise applications in financial, healthcare, energy, and other domains. In particular, large language models (LLMs) are AI systems with advanced capabilities in natural language understanding and response generation, widely adopted in various software applications. Users may interact with LLMs integrated into software applications via user prompts. Specifically, a user submits a natural language utterance in the form of a user prompt to the software application. The software application encapsulates the natural language utterance in a system instruction and, potentially, other information to generate an LLM prompt. The LLM prompt is processed by an LLM to generate a response.

To process the LLM prompt, the LLM may use and potentially respond with proprietary and confidential information. For example, a user may ask questions about internal data and formulas of a particular company. As another example, a physician user may ask questions about a medical history of a patient to obtain a diagnosis. The proprietary and confidential data may be gathered from internal data source by LLM or the application and added to the LLM prompt. Accordingly, the response provided by the LLM may expose protected data. Because of the potentially protected data in the response, users generally login with login credentials to the application connected to the LLM in order to authenticate themselves. The application checks the user's login credentials and only obtains the data to which a user has access.

In order to gain access to the protected data, cybercriminals often use various malicious programs that attempts to access multiple user accounts or multiple accounts of the same user. The malicious program on a networked computer system attempts to obtain or bypass the login credentials of one or more valid users. When the cybercriminal, such as through the malicious program, has authenticated to the application by impersonating the valid user, the cybercriminal, with or without the malicious program, may send various user prompts that causes the LLM to respond with the protected data. Thus, the cybercriminal may gain access to protected data.

The application may have hundreds or thousands of cyberattacks per day that are interspersed within valid requests for data. Thus, detecting and blocking such cyberattacks while at the same time maintaining real time responsiveness is a challenge.

### SUMMARY

Particular aspects are set out in the appended independent claims. Various optional embodiments are set out in the dependent claims.

In general, in one aspect, one or more embodiments relate to a method including receiving, from a user computing device, an online user prompt to a large language model (LLM), the online user prompt associated with a user identifier, tokenizing the online user prompt to generate a target set of tokens, and tagging each token in the target set based on parts of speech to obtain a tagged target set. The method further includes processing, by a vector embedding model, the tagged target set to generate multiple vector embeddings, processing, by a sequential model, the vector embeddings to generate a target vector, processing, by an anomaly detection model, the target vector using a signature of the user identifier to detect whether user impersonation exists. The method further includes blocking, in real time with receiving the online user prompt, access to the LLM by the user computing device based on detecting that user impersonation exists.

In general, in one aspect, one or more embodiments relate to a system including at least one computer processor, an interface executing on the at least one computer processor and configured to receive, from a user computing device, an online user prompt to a large language model (LLM), the online user prompt associated with a user identifier, and an LLM security system executing on the at least one computer processor. The LLM security system includes a pattern analysis engine including a tokenizer configured to tokenize the online user prompt to generate a target set of tokens, and a token tagger configured to tag each token in the target set based on parts of speech to obtain a tagged target set. The LLM security system further includes a profile creator including a vector embedding model configured to process the tagged target set to generate multiple vector embeddings, and a sequential model configured to process the vector embeddings to generate a target vector. The LLM security system further includes an anomaly detection model configured to process the target vector using a signature of the user identifier to detect whether user impersonation exists. The LLM security system is configured to block, in real time with receiving the online user prompt, access to the LLM by the user computing device based on detecting that user impersonation exists.

In general, in one aspect, one or more embodiments relate to a method including receiving, from a user computing device, an online user prompt to a large language model (LLM), the online user prompt associated with a user identifier, tokenizing the online user prompt to generate a target set of tokens, and tagging each token in the target set based on parts of speech to obtain a tagged target set. The method further includes processing, by a vector embedding model, the tagged target set to generate multiple vector embeddings, processing, by a sequential model, the vector embeddings to generate a target vector, and processing, by an anomaly detection model trained on a signature of the user identifier, the target vector to detect whether user impersonation exists. The method further includes blocking, in real time with receiving the online user prompt, access to the LLM by the user computing device based on detecting that user impersonation exists.

Other aspects of one or more embodiments will be apparent from the following description and the appended claims.

### BRIEF DESCRIPTION OF DRAWINGS

FIG. 1 shows a diagram of a system, in accordance with one or more embodiments.
FIG. 2 shows a flowchart for training the machine learning models on the software application in accordance with one or more embodiments.
FIG. 3 shows a flowchart for generating a signature of a user in accordance with one or more embodiments.
FIG. 4 shows a flowchart for processing a user prompt in accordance with one or more embodiments.
FIG. 5A and FIG. 5B show a computing system in accordance with one or more embodiments.

Like elements in the various figures are denoted by like reference numerals for consistency.

### DETAILED DESCRIPTION

User impersonation attacks occur when a malicious computing device, such as under the control of a malicious program, gains access to the user's account such that requests from the malicious computing device cannot be distinguished from the requests from the valid user. For example, the malicious computing device may have obtained the valid user's login credentials and then use the valid user's login credentials to impersonate the valid user. When impersonating the valid user, the malicious computing device may send online user prompts to a large language model (LLM) via an application in an effort to obtain protected data.

To block user impersonation attacks, one or more embodiments are directed to machine learning to create and evolve a signature for each user. Specifically, the machine learning system constructs an individual digital signature that captures various linguistic attributes of the user. The signature is created from historical natural language utterances of the user, such as from previous sessions with the LLM.

During inference, when one or more online user prompts are received, the online user prompts may be processed as follows. The online user prompt is tokenized to partition the online user prompt into a target set of tokens. Each token in the target set of tokens may correspond to a word, phrase, or a portion of a word or phrase in the target set. The tokens are tagged with parts of speech tags using natural language processing to generate tagged tokens. By tagging the tokens, syntactic constructs that are characteristic of the user linguistic patterns are captured. The tagged tokens are passed through a vector embedding model to generate a vector embeddings. In generating the vector embeddings, the tags are additional features that the vector embedding model uses. Further, the vector embedding model is trained to capture linguistic attributes of each token. A sequential model may then process the vector embeddings to generate a target vector for the particular online user prompt. Namely, the sequential model is configured to capture, in the target vector, how the different tokens relate to each other to form the online user prompt. Thus, the target vector describes the linguistic characteristics of the online user prompt. An anomaly detection model may then process the target vector to determine whether a user impersonation attack is occurring. If the anomaly detection model detects a user impersonation attack, then the online user prompt is blocked. The blockage is performed in real-time to prevent further exposure of confidential data.

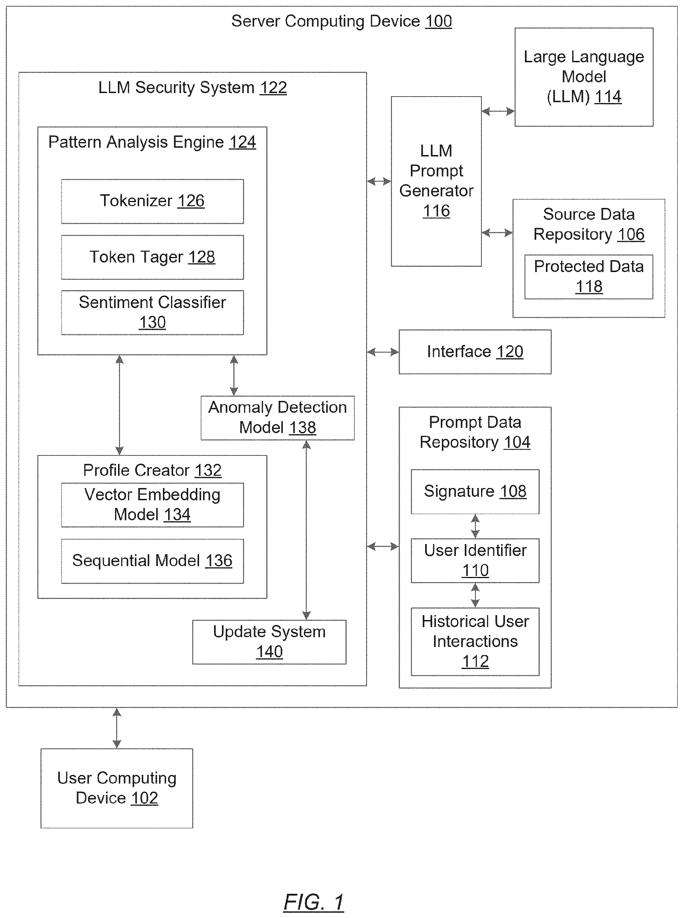

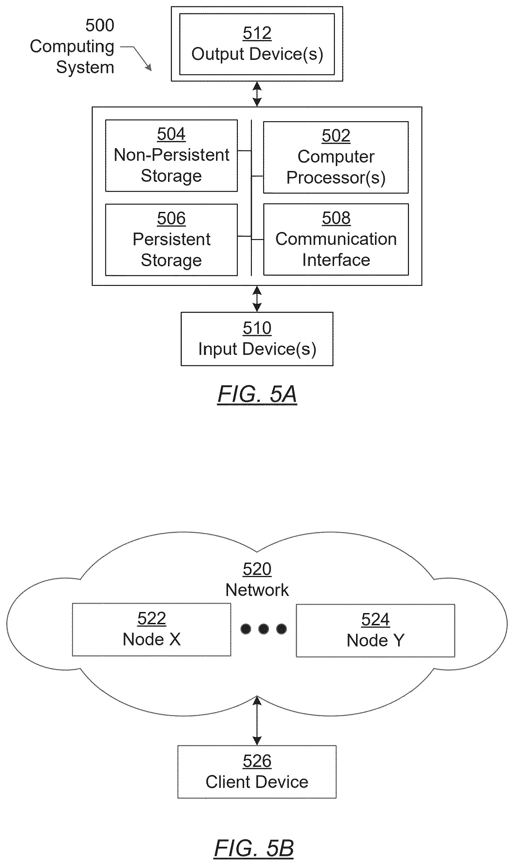

Attention is now turned to the figures. FIG. 1 shows a computing system, in accordance with one or more embodiments. The system includes a server computing device (100) connected to a user computing device (102). The server computing device (100) and the user computing device may correspond to the computing system described in FIG. 5A and FIG. 5B. The computing system includes various hardware components, such as at least one computer processor and storage. If multiple computer processors, the various computer processors may execute the same or different components of the system shown in FIG. 1.

The server computing device (100) shown in FIG. 1 includes a prompt data repository (104) and a source data repository (106). The prompt data repository (104) and the source data repository (106) are a type of storage unit or device (*e.g.,* a file system, database, data structure, or any other storage mechanism) for storing data. The prompt data repository (104) and the source data repository (106) may include multiple different, potentially heterogeneous, storage units and/or devices.

The prompt data repository (104) is configured to store a signature (108), a user identifier (110), and historical user interactions (112). A signature (108) is a unique description of linguistic properties of a particular user's speech patterns. For example, the linguistic properties that are captured in the signature may include grammatical properties (*e.g*., correct or incorrect grammar, passive or active voice, verb tense, and other grammatical attributes), language, syntax, type of jargon, complex or simple expressions, or other characteristics. In some embodiments, the signature is a collection of clusters. Each cluster may be defined by the centroid of the cluster or a set of vector embeddings. Other types of signatures may be used.

The user identifier (110) is a unique identifier of a user account. For example, the user identifier (110) may be an alphanumeric identifier with the user's login, and correspondingly, the user and the user's signature (108).

The historical user interactions (112) include historical user utterances of the user during previous interactions of the user. An interaction is a communication session between a valid user and the LLM. A valid user is the user that correctly accesses a user account (*i.e.,* the person to whom the user account belongs). The historical user utterances in the historical user interactions (112) may be past user prompts of the user to the LLM, email, and other forms of written expression of the user.

The user prompt is a prompt generated by a particular user. An online user prompt is a user prompt received from a network, such as the Internet. Because the user prompt is online, the user submitting the user prompt cannot be known with certainty. The user prompt is an utterance submitted by the user that requests information from the LLM (114). The LLM (114) is a type of artificial intelligence (AI) program that performs natural language processing to recognize and generate text and images and other content. The LLM (114) may have hundreds of thousands to trillions of parameters. Examples of LLMs include versions of ChatGPT^{®}, Llama^{®}, Mistral-7B^{®}, and proprietary LLMs, etc.

The LLM prompt generator (116) is configured to generate the LLM prompt from the user prompt. Specifically, the LLM prompt generator (116) is configured to encapsulate the user prompt into the LLM prompt with a system instruction and context. The system instruction includes specific instructions of an application, not shown, that are further provided to the LLM to process the user prompt. The system instruction may include, for example, the format of the LLM response provided by the application LLM (114), constraints on the LLM response, information as to how to provide the LLM response. The context is information specific to the user prompt, such as by being directed to information about the user, the account of the user, the navigational patterns of the user, general information about the user utterance, and other information. The context may include protected data (118) gathered from the source data repository (106). For example, the context may include added information obtained by the LLM prompt generator (116), such as information gathered from a user's account, web-based information, or other information that may assist the application LLM (114) to provide an accurate and complete response. Different versions of LLM prompt generators (116) may be used, whereby the different versions have different iterations of natural language understanding application, machine learning tools, data repositories that are accessed, or configurations of components.

The context added by the LLM prompt generator (116) may include protected data (118). Protected data (118) is any data that is non-public. Protected data (118) may be data that is confidential, requires a set level of permissions to access, a subscription, or other type of data. Protected data may be added to the context or may be accessed directly by the LLM (114).

The server computing device (100) also includes an interface. The interface may be an application programming interface (API), graphical user interface (GUI), or other interface for receiving the user prompt and presenting a response from the LLM (*e.g.,* LLM response).

The server computing system (100) also includes a LLM security system (122). The LLM security system (122) is configured to secure access to the LLM (114). For example, the LLM security system (122) is configured to prevent exposure of protected data (118) to malicious users. One type of exposure is due to user impersonation attacks. A user impersonation attack may occur when a user is authenticated to the server computing device (100), but the user computing device is controlled by a malicious user or program pretending to be the valid user.

The LLM security system (122) includes a pattern analysis engine (124), a profile creator (124), an anomaly detection model (138), and an update system (140). The pattern analysis engine (124) is software configured to extract linguistic patterns from input in the form of prompts or utterances. The pattern analysis engine (124) includes a tokenizer (126) that is configured to tokenize the input to generate a set of tokens. Each token is a chunk or portion of the input. For example, a token may be a symbol, word, phrase, or other sequence of characters expressly within the input.

The pattern analysis engine (124) may also include a token tagger (128) is configured to tag one or more of the tokens. Tagging the token assigns a tag to the token. The tag is a unique identifier of a characteristic of the token. For example, the tag may be a unique identifier of a part of speech (subject, verb, direct object, adjective, etc.). The token tagger (128) may also include an entity classifier that is configured to classify entities identified in one or more tokens to determine the class of the entity and assign corresponding tag for the class. Entities may be identified by the proper name of the entities. For example, the entities may be a company, family, organization, or individual. In the example, the entity classifier may classify the entity based on the industry of the company or organization, the relationship of the individual with respect to the user, or other class of the entity. The entity classifier is configured to assign the tag to the token that uniquely identifies the class.

The pattern analysis engine (124) further includes a sentiment classifier (130). The sentiment classifier (130) is configured to classify the overall sentiment of the input and add a tag uniquely identifying the sentiment to the set of tokens. For example, the sentiment may be angry, happy, hopeful, instructive, or other emotion of the user expressed through the input.

The profile creator (132) is configured to create a vector describing the linguistic properties of the input. The profile creator (132) may include a vector embedding model (134) and a sequential model (136). The vector embedding model (134) is configured to create vector embeddings of tagged tokens. Each tagged token may have a corresponding vector embedding that is a vector representation of the token. By way of an example, the vector embedding model (134) may be a word embeddings model, such as Word2Vec, GloVe, or Transformer-based embeddings (*e.g*., BERT, GPT) to capture semantic meanings.

The sequential model (136) is configured to generate the vector from the set of vector embeddings. For example, the sequential model (136) may be a recurrent neural networks (RNNs), long short-term memory (LSTM) network, or transformer-based architectures to capture sequences and structures.

The profile creator (132) may be configured to create the signature (108) from the vector. For example, the profile creator (132) may include a clustering algorithm (not shown) that clusters multiple vectors into clusters. The profile creator (132) may save the clusters of vectors as the signature, the centroid of the clusters as the signature, or other aspect of the clusters as the signature. For example, the clustering algorithm may be K-means clustering algorithm, DBSCAN clustering algorithm, PCstream clustering algorithm or hierarchical clustering.

Continuing with the LLM security system (122), the anomaly detection model (138) is configured to detect an anomaly between the signature (108) and a target vector generated from an online user prompt. The anomaly is indicative of a user impersonation attack. For example, the anomaly detection model may be or may include an isolation forest model, an autoencoder, or another model that identifies a deviation from a normal pattern.

In some embodiments, the anomaly detection model (138) is trained for a particular user. For example, the anomaly detection model (138) may be trained with the particular signature of the user. In such embodiments, each user may have an independent anomaly detection model. The independent anomaly detection model may be a general model that is further specifically trained for the user. In other embodiments, the anomaly detection model (138) is a general model that is general to multiple users and is configured to use a signature of the user as input.

The LLM security system (122) further includes an update system (140). The update system (140) is configured to train the various machine learning models of the LLM security system. Further, the update system (140) may be configured to continuously update the signature of the user as new validated user prompts are received. In one or more embodiments, the update system (140) is a continuous learning framework that employs models capable of learning and reinforcement learning. The update system may further be configured to apply principal component analysis to the cause dimensionality reduction in the number of features. Further, the update system (140) may apply boosting algorithms to the anomaly detection model to enhance model accuracy and improve previous seen trees.

Although the system shown in FIG. 1 shows a single signature and user identifier, the system may have thousands or millions of users, each with individual accounts and with individual signatures. The system is configured to perform real-time processing of online user prompts to allow or block an LLM response. The real-time means that the allowing or blocks is performed within milliseconds or seconds of receiving the online user prompt.

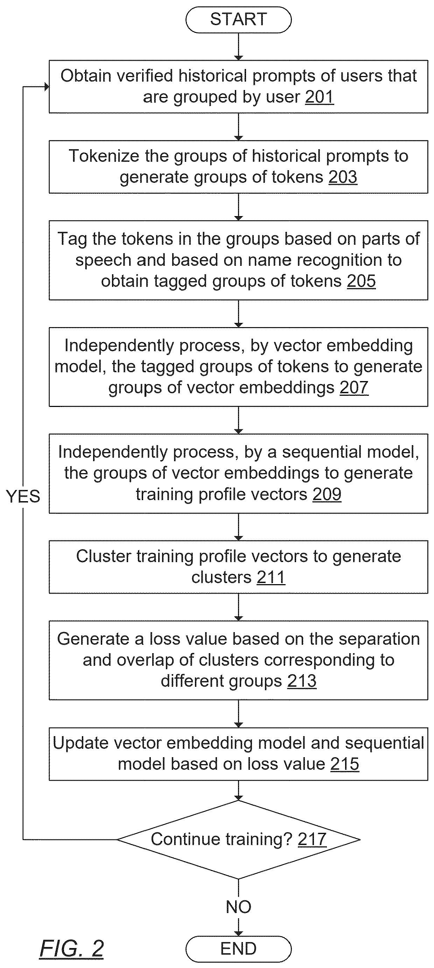

Turning to the flowcharts, FIG. 2, FIG. 3, and FIG. 4 show flowcharts in accordance with one or more embodiments. While the various steps in the flowcharts are presented and described sequentially, at least some of the steps may be executed in different orders, may be combined or omitted, and at least some of the steps may be executed in parallel. Furthermore, the steps may be performed actively or passively.

FIG. 2 shows a flowchart for training the machine learning models on the software application in accordance with one or more embodiments. In Block 201, multiple verified historical prompts of multiple users that are grouped by user are obtained to have multiple groups of historical prompts. As valid users submit user prompts to the LLM, the prompts may be stored. Through other techniques or review, the prompts are validated as coming from valid users. Each user's prompt is collected as a group of prompts. Thus, each user has a distinct corresponding group.

In some cases, the system also captures malicious user's prompts, and groups the malicious user prompts associated with each malicious user. Thus, each malicious user may also have a corresponding group of prompts. By including groups of prompts for malicious users, the system may also learn to generate signatures that separate each user from each other user.

In Block 203, the groups of historical prompts are tokenized based on parts of speech to obtain multiple tagged groups of tokens. A tokenizer divides the prompts into tokens. Some tokens for phrases may be extracted based on being part of a dictionary of phrases.

In Block 205, the tokens are tagged based on parts of speech and name recognition to obtain multiple tagged groups of tokens. A grammar engine may be used to identify the part of speech of each token within the prompt. Further, a dictionary of entity names may be used to relate the entity name to the type of entity. The corresponding tag is assigned to each token to create a tagged token.

In Block 207, the vector embedding model independently processes the tagged groups of tokens to generate multiple groups of vector embeddings. Independently for each token, the tag and the token are processed by the vector embedding model to generate a vector embedding. The tag may be a feature that is used by the vector embedding model. At this stage, the vector embedding maintains the relationship to the particular prompt having the corresponding token, and to the group corresponding to the valid user that submitted the prompt. Rather than or in addition to the tag being used as a feature for Block 207, the tag may be used as a feature for Block 209.

In Block 209, the sequential model independently processes the groups of vector embeddings to generate multiple training profile vectors. For each set of vector embeddings, the vector embeddings are processed in order corresponding to the tokens in the prompt to generate a profile vector for the prompt. The goal of the profile vector is to capture the linguistic properties of the prompt. The profile vector may also capture the meaning of each prompt.

In Block 211, the training profile vectors are clustered to generate multiple clusters. A clustering algorithm may be applied to the training profile vectors independently for each group to create an individual set of clusters for each group of prompts.

In Block 213, a loss value is generated based on a separation and an overlap of the clusters. The loss value may be based on how well the clusters are distinguished from each other. For example, if the set of clusters has a larger overlap with other sets of clusters, then the loss value is increased. Less overlap causes the loss value to decrease. Thus, the amount of loss is based on the degree to which the models capture the particular linguistic properties that distinguish each user's prompts.

In Block 215, the vector embedding model and the sequential model are updated based on the loss value. The loss is backpropagated through the vector embedding model and the sequential model to cause the parameters and weights of the respective models to be updated. Based on the amount of loss, in Block 217, a determination is made whether to continue training. Through the iterative training process, the resulting models, and correspondingly, the computer system, is improved.

Although FIG. 2 describes only using prompts, any natural language utterance may be used to train the models in one or more embodiments.

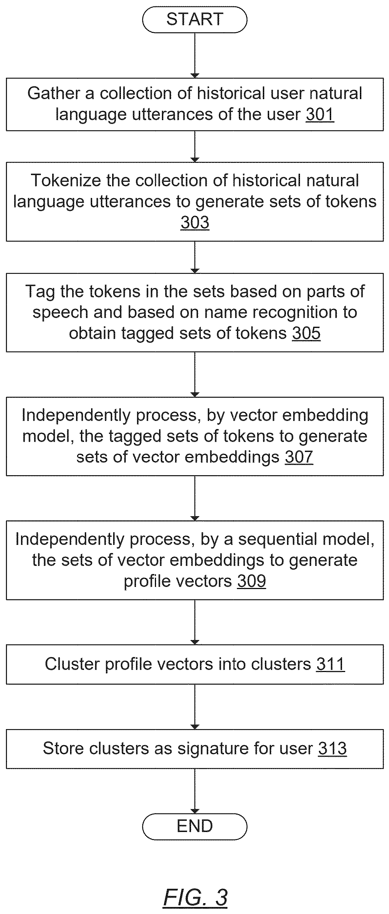

FIG. 3 shows a flowchart for generating a signature of a user in accordance with one or more embodiments. In Block 301, a collection of historical user natural language utterances of a user is gathered. Gathering the collection of historical user natural language utterances may be performed using a same technique as described in FIG. 2. The user natural language utterances may be from a variety of sources and are validated as being from a particular user.

In Block 303, the collection of historical natural language utterances is tokenized to generate multiple sets of tokens. A tokenizer divides the historical natural language utterances into tokens. Some tokens for phrases may be extracted based on being part of a dictionary of phrases.

In Block 305, the tokens in the sets of tokens are tagged based on parts of speech and name recognition to obtain multiple tagged sets of tokens. A grammar engine may be used to identify the part of speech of each token within the natural language utterance. Further, a dictionary of entity names may be used to relate the entity name to the type of entity. The corresponding tag is assigned to each token to create a tagged token.

In Block 307, the vector embedding model independently processes the tagged sets of tokens to generate multiple sets of vectors embeddings. Independently for each token, the tag and the token are processed by the vector embedding model to generate a vector embedding. The tag may be a feature that is used by the vector embedding model. At this stage, the vector embedding maintains the relationship to the particular historical natural language utterance having the corresponding token. Thus, multiple sets of vector embeddings are generated, whereby at least one set exists for each natural language utterance.

In Block 309, the sequential model independently processes the sets of vector embeddings to generate multiple profile vectors. For each set of vector embeddings, the vector embeddings are processed in order corresponding to the tokens in the natural language utterance to generate a profile vector for the natural language utterance. Through the training from FIG. 2, the result of the processing in Blocks 307 and 309 is a vector that describes the distinguishing linguistic characteristics of the natural language utterance.

In Block 311, the profile vectors are clustered into multiple clusters. Clustering may be performed as described above with reference to FIG. 2.

In Block 313, the clusters are store as a signature of the user. A vector data store may store each vector separately and associated with the user identifier, whereby the collection of vectors creates a signature. As another example, techniques for storing clusters may be used.

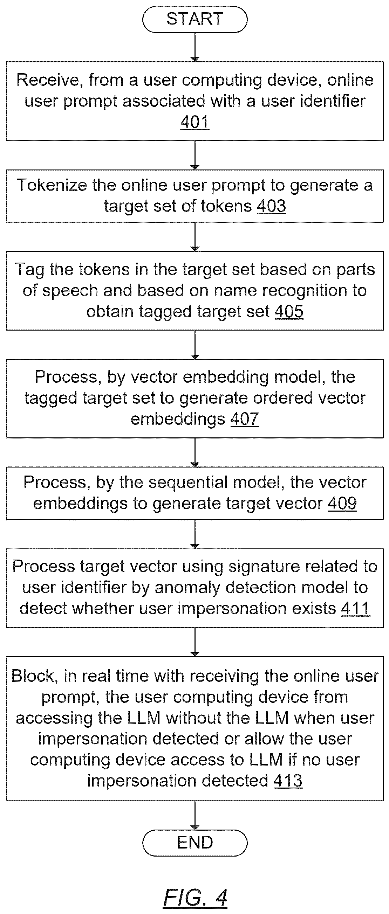

FIG. 4 shows a flowchart for processing a user prompt in accordance with one or more embodiments. In Block 401, from a user computing device, an online user prompt to a LLM is received. The online user prompt associated with a user identifier. For example, a successful authentication to the server computing system may be received. With the successful authentication whether by the valid user or a malicious user, monitoring may be performed. The online user prompt is received and processed as part of the monitoring.

In Block 403, the online user prompt is tokenized to generate a target set of tokens. A tokenizer divides the prompts into tokens. Some tokens for phrases may be extracted based on being part of a dictionary of phrases.

In Block 405, each token in the target set is tagged based on parts of speech and based on name recognition to obtain a tagged target set. A grammar engine may be used to identify the part of speech of each token within the online user prompt. Further, a dictionary of entity names may be used to relate the entity name to the type of entity. The corresponding tag is assigned to each token to create a tagged token.

In Block 407, the vector embedding model processes the first tagged target set to generate vector embeddings. Independently for each token, the tag and the token are processed by the vector embedding model to generate a vector embedding. The tag may be a feature that is used by the vector embedding model. At this stage, the vector embedding maintains the relationship to the particular prompt having the corresponding token, and to the group corresponding to the valid user that submitted the prompt.

In Block 409, the sequential model processes processing, by a sequential model, the vector embeddings to generate a target vector. For each set of vector embeddings, the vector embeddings are processed in order corresponding to the tokens in the prompt to generate a target vector for the online user prompt. The goal of the target vector is to capture the linguistic properties of the online user prompt.

In Block 411, the anomaly detection model processes the target vector using a signature of the user identifier to detect whether user impersonation exists. The anomaly detection model uses, as input, the target vector and the signature associated with the user identifier to determine whether an anomaly exists. If the target vector is anomalous as compared to the signature, the anomaly detection model may determine that a user impersonation exists.

In Block 413, in real time with receiving the online user prompt, the user computing device is blocked from accessing the LLM without the LLM when user impersonation detected, or the user computing device is allowed access to LLM if no user impersonation detected.

For example, the anomaly detection model may calculate a vector distance to each of multiple clusters of profile vectors in the signature. Each of the profile vectors is generated from multiple historical user utterances associated with the user identifier as described above in reference to FIG. 3. In the example, the anomaly detection model further determines that the user impersonation exists responsive to the vector distance being greater than a threshold.

Blocking access to the LLM stops a response from the LLM to the online user prompt from being sent to the first user computing device.

In some cases, the processing of FIG. 4 is performed over a sequence of online user prompts. Specifically, from the sequence of online user prompts, target vectors are generated. Each target vector may be processed by the anomaly detection model independently and with respect to the sequence. Thus, the pattern may be detected in the multiple target vectors throughout the sequence or may be detected in individual target vectors.

Although FIG. 2, FIG. 3, and FIG. 4 describe an anomaly detection model that uses the signature as input. Multiple anomaly detection models may exist, whereby an individual anomaly detection model is trained for each signature. In such a scenario, FIG. 3 may include a further step of training the anomaly detection model on the signature of the user. Blocks 411 may be replaced by the following. The anomaly detection model trained on a signature of a user identifier processes the target vector or a sequence of target vectors to detect whether user impersonation exists.

The following is an example used for explanatory purposes only not intended to limit the scope of the invention. Consider the scenario in which the valid user is a patient accessing their patient portal. The valid user also happens to be a doctor, albeit with a different hospital. Because the patient is a doctor, the patient asks prompt through their patient portal, such as "What cellular type is most associated with carcinoma of the lung?" The patient may also ask in a prompt, "What occurs when the bronchial tree becomes restricted?" The questions are transmitted to an LLM that processes the questions and returns a result. Further, the questions are processed by the LLM security system to generate a signature. The LLM security system breaks the question into tokens, each corresponding to individual words or phrases (e.g., "What", "cellular", "type", "is", "most associated", "with", "carcinoma", "of", "the", "lung", "cellular type", "most associated with", "carcinoma of the lung"), tags the tokens based on parts of speech and sends the tagged tokens to a vector embedding model to generate vector embeddings. The sequential model then processes the vector embeddings to generate signatures for the patients prompts.

Next, consider the scenario in which a malicious program is able to log into the patient portal by using a keystroke logger on the patient's computer to obtain the patient's credentials. The cybercriminal, located in a different country from the patient, does not know that the patient is a doctor. Thus, the malicious program of the cybercriminal uses the common phrasing when generating prompts. Namely, for the same questions as above, the malicious program would phrase the questions as, "What cancer usually is associated with cancer of the lung?" and "Why can I not breathe easily?" The LLM security system breaks the question into tokens, each corresponding to individual words or phrases (*e.g*., "What", "cancer", "usually", "is", "associated ", "with", "cancer", "of", "the", "lung", "associated with", "cancer of the lung"), tags the tokens based on parts of speech and sends the tagged tokens to a vector embedding model to generate vector embeddings. Even though the words carcinoma and cancer mean the same, the corresponding vector embeddings of carcinoma and cancer may be vastly different because one is medical jargon, and the other is common speech. Likewise, "bronchial tree" may also have vastly different vector embedding than breathing. Thus, when the sequential model processes the vector embedding, the vector is different. Because the patient in this scenario uses medical jargon, the signature is different than the target vectors generated for the prompts transmitted from the malicious program. The anomaly detection model detects the difference and determines that a user impersonation attack exists. The LLM is blocked from answering one or both questions. Further, the malicious program session may be blocked, the user account may be suspended, and the user may be advised that their security credentials appear to be compromised.

One or more embodiments may be implemented on a computing system specifically designed to achieve an improved technological result. When implemented in a computing system, the features and elements of the disclosure provide a significant technological advancement over computing systems that do not implement the features and elements of the disclosure. Any combination of mobile, desktop, server, router, switch, embedded device, or other types of hardware may be improved by including the features and elements described in the disclosure.

For example, as shown in FIG. 5A, the computing system (500) may include one or more computer processor(s) (502), non-persistent storage device(s) (504), persistent storage device(s) (506), a communication interface (508) (*e.g.,* Bluetooth interface, infrared interface, network interface, optical interface, *etc.*), and numerous other elements and functionalities that implement the features and elements of the disclosure. The computer processor(s) (502) may be an integrated circuit for processing instructions. The computer processor(s) (502) may be one or more cores, or micro-cores, of a processor. The computer processor(s) (502) includes one or more processors. The computer processor(s) (502) may include a central processing unit (CPU), a graphics processing unit (GPU), a tensor processing unit (TPU), combinations thereof, *etc.*

The input device(s) (510) may include a touchscreen, keyboard, mouse, microphone, touchpad, electronic pen, or any other type of input device. The input device(s) (510) may receive inputs from a user that are responsive to data and messages presented by the output device(s) (512). The inputs may include text input, audio input, video input, *etc.,* which may be processed and transmitted by the computing system (500) in accordance with one or more embodiments. The communication interface (508) may include an integrated circuit for connecting the computing system (500) to a network (not shown) (*e.g.,* a local area network (LAN), a wide area network (WAN) such as the Internet, mobile network, or any other type of network) or to another device, such as another computing device, and combinations thereof.

Further, the output device(s) (512) may include a display device, a printer, external storage, or any other output device. One or more of the output device(s) (512) may be the same or different from the input device(s) (510). The input device(s) (510) and output device(s) (512) may be locally or remotely connected to the computer processor(s) (502). Many different types of computing systems exist, and the aforementioned input device(s) (510) and output device(s) (512) may take other forms. The output device(s) (512) may display data and messages that are transmitted and received by the computing system (500). The data and messages may include text, audio, video, *etc.,* and include the data and messages described above in the other figures of the disclosure.

Software instructions in the form of computer readable program code to perform embodiments may be encoded, in whole or in part, temporarily or permanently, on a computer readable medium. A computer readable medium may be a computer-readable storage medium, which may be referred to as a non-transitory computer readable medium, such as a solid state drive (SSD), compact disk (CD), digital video disk (DVD), storage device, a diskette, a tape, flash memory, physical memory, or any other computer readable storage medium. A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems. Specifically, the software instructions may correspond to computer readable program code that, when executed by the computer processor(s) (502), is configured to perform one or more embodiments, which may include transmitting, receiving, presenting, and displaying data and messages described in the other figures of the disclosure.

The computing system (500) in FIG. 5A may be connected to, or be a part of, a network. For example, as shown in FIG. 5B, the network (520) may include multiple nodes (*e.g*., node X (522) and node Y (524), as well as extant intervening nodes between node X (522) and node Y (524)). Each node may correspond to a computing system, such as the computing system shown in FIG. 5A, or a group of nodes combined may correspond to the computing system shown in FIG. 5A. By way of an example, embodiments may be implemented on a node of a distributed system that is connected to other nodes. By way of another example, embodiments may be implemented on a distributed computing system having multiple nodes, where each portion may be located on a different node within the distributed computing system. Further, one or more elements of the aforementioned computing system (500) may be located at a remote location and connected to the other elements over a network.

The nodes (*e.g.,* node X (522) and node Y (524)) in the network (520) may be configured to provide services for a client device (526). The services may include receiving requests and transmitting responses to the client device (526). For example, the nodes may be part of a cloud computing system. The client device (526) may be a computing system, such as the computing system shown in FIG. 5A. Further, the client device (526) may include or perform all or a portion of one or more embodiments.

The computing system of FIG. 5A may include functionality to present data (including raw data, processed data, and combinations thereof) such as results of comparisons and other processing. For example, presenting data may be accomplished through various presenting methods. Specifically, data may be presented by being displayed in a user interface, transmitted to a different computing system, and stored. The user interface may include a graphical user interface (GUI) that displays information on a display device. The GUI may include various GUI widgets that organize what data is shown, as well as how data is presented to a user. Furthermore, the GUI may present data directly to the user, *e.g.,* data presented as actual data values through text, or rendered by the computing device into a visual representation of the data, such as through visualizing a data model.

Therefore, from one perspective, there have been described approaches for security against identity theft in generative artificial intelligence applications which include receiving, from a user computing device, an online user prompt to a large language model (LLM), the online user prompt associated with a user identifier, tokenizing the online user prompt to generate a target set of tokens, and tagging each token in the target set based on parts of speech to obtain a tagged target set. Security further includes processing, by a vector embedding model, the tagged target set to generate multiple vector embeddings, processing, by a sequential model, the vector embeddings to generate a target vector, processing, by an anomaly detection model using or trained with a signature of the user identifier, the target vector to detect whether user impersonation exists. Security further includes blocking, in real time with receiving the online user prompt, access to the LLM based on detecting that user impersonation exists.

Further examples of feature combinations taught by the present disclosure are set out in the following numbered clauses.

Clause 1. A method comprising: receiving, from a first user computing device, a first online user prompt to a large language model (LLM), the first online user prompt associated with a first user identifier; tokenizing the first online user prompt to generate a first target set of tokens; tagging each token in the first target set based on parts of speech to obtain a first tagged target set; processing, by a vector embedding model, the first tagged target set to generate a first plurality of vector embeddings; processing, by a sequential model, the first plurality of vector embeddings to generate a first target vector; processing, by an anomaly detection model, the first target vector using a first signature of the first user identifier to detect whether user impersonation exists; and blocking, in real time with receiving the first online user prompt, access to the LLM by the first user computing device based on detecting that user impersonation exists.

Clause 2. The method of clause 1, wherein blocking access to the LLM stops a response from the LLM to the first online user prompt from being sent to the first user computing device.

Clause 3. The method of clause 1 or 2, further comprising: calculating, by the anomaly detection model, a vector distance to each of a plurality of clusters of profile vectors in the first signature, wherein the plurality of clusters of profile vectors is generated from a plurality of historical user utterances associated with the first user identifier; and determining, by the anomaly detection model, that the user impersonation exists responsive to the vector distance being greater than a threshold.

Clause 4. The method of clause 1, 2 or 3, wherein tagging each token in the first target set is further based on name recognition.

Clause 5. The method of any preceding clause, further comprising: receiving, from a second user computing device, a second online user prompt to the LLM, the second online user prompt associated with a second user identifier; tokenizing the second online user prompt to generate a second target set of tokens; tagging each token in the second target set based on parts of speech to obtain a second tagged target set; processing, by the vector embedding model, the second tagged target set to generate a second plurality of vector embeddings; processing, by the sequential model, the second plurality of vector embeddings to generate a second target vector; processing, by the anomaly detection model, the second target vector using a second signature of the second user identifier to detect whether user impersonation exists; and allowing, in real time with receiving the second online user prompt, access to the LLM by the second user computing device based on detecting that user impersonation does not exist.

Clause 6. The method of any preceding clause, further comprising: obtaining a plurality of verified historical prompts of a plurality of users that are grouped by user to obtain a plurality of groups of historical prompts; tokenizing the plurality of groups of historical prompts based on parts of speech to obtain a plurality of tagged groups of tokens; independently process, by the vector embedding model, the plurality of tagged groups of tokens to generate a plurality of groups of vector embeddings; independently process, by the sequential model, the plurality of groups of vector embeddings to generate a plurality of training profile vectors; clustering the plurality of training profile vectors to generate a plurality of clusters; generating a loss value based on a separation and an overlap of the plurality of clusters; and updating the vector embedding model and the sequential model based on the loss value.

Clause 7. The method of any preceding clause, further comprising: gathering a collection of historical user natural language utterances of the first user; tokenizing the collection of historical natural language utterances to generate a plurality of sets of tokens; tagging tokens in the plurality of sets of tokens based on parts of speech and name recognition to obtain a plurality of tagged sets of tokens; independently processing, by the vector embedding model, the tagged sets of tokens to generate a plurality of sets of vectors embeddings; independently processing, by the sequential model, the plurality of sets of vector embeddings to generate a plurality of profile vectors; clustering the plurality of profile vectors into a plurality of clusters; and storing the plurality of clusters as a signature of the user identifier.

Clause 8. The method of any preceding clause, further comprising: generating a sequence of target vectors comprising the first target vector from a sequence of online user prompts from the first user computing device, the sequence of online user prompts comprising the first online user prompt, wherein processing the first target vector by the anomaly detection model is performed by processing the sequence of target vectors to detect a pattern indicating that the user impersonation exists.

Clause 9. A system comprising: at least one computer processor; an interface executing on the at least one computer processor and configured to receive, from a first user computing device, a first online user prompt to a large language model (LLM), the first online user prompt associated with a first user identifier; and an LLM security system executing on the at least one computer processor and comprising: a pattern analysis engine comprising: a tokenizer configured to tokenize the first online user prompt to generate a first target set of tokens, and a token tagger configured to tag each token in the first target set based on parts of speech to obtain a first tagged target set, a profile creator comprising: a vector embedding model configured to process the first tagged target set to generate a first plurality of vector embeddings, and a sequential model configured to process the first plurality of vector embeddings to generate a first target vector, and an anomaly detection model configured to process the first target vector using a first signature of the first user identifier to detect whether user impersonation exists, and wherein the LLM security system is configured to block, in real time with receiving the first online user prompt, access to the LLM by the first user computing device based on detecting that user impersonation exists.

Clause 10. The system of clause 9, wherein blocking access to the LLM stops a response from the LLM to the first online user prompt from being sent to the first user computing device.

Clause 11. The system of clause 9 or 10, wherein the anomaly detection model is further configured to: calculate a vector distance to each of a plurality of clusters of profile vectors in the first signature, wherein the plurality of clusters of profile vectors is generated from a plurality of historical user utterances associated with the first user identifier; and determine that the user impersonation exists responsive to the vector distance being greater than a threshold.

Clause 12. The system of clause 9, 10 or 11, wherein tagging each token in the first target set is further based on name recognition.

Clause 13. The system of any of clause 9 to 12, wherein: the interface is further configured to: receive, from a second user computing device, a second online user prompt to the LLM, the second online user prompt associated with a second user identifier, and the LLM security system is further configured to: tokenize the second online user prompt to generate a second target set of tokens; tag each token in the second target set based on parts of speech to obtain a second tagged target set; process, by the vector embedding model, the second tagged target set to generate a second plurality of vector embeddings; process, by the sequential model, the second plurality of vector embeddings to generate a second target vector; process, by the anomaly detection model, the second target vector using a second signature of the second user identifier to detect whether user impersonation exists; and allow, in real time with receiving the second online user prompt, access to the LLM by the second user computing device based on detecting that user impersonation does not exist.

Clause 14. The system of any of clauses 9 to 13, wherein the LLM security system further comprises an update system configured to train the LLM security system, wherein training the LLM security system comprises: obtaining a plurality of verified historical prompts of a plurality of users that are grouped by user to obtain a plurality of groups of historical prompts; tokenizing the plurality of groups of historical prompts based on parts of speech to obtain a plurality of tagged groups of tokens; independently process, by the vector embedding model, the plurality of tagged groups of tokens to generate a plurality of groups of vector embeddings; independently process, by the sequential model, the plurality of groups of vector embeddings to generate a plurality of training profile vectors; clustering the plurality of training profile vectors to generate a plurality of clusters; generating a loss value based on a separation and an overlap of the plurality of clusters; and updating the vector embedding model and the sequential model based on the loss value.

Clause 15. The system of any of clauses 9 to 14, wherein the LLM security system further comprises an update system configured to train the LLM security system, wherein training the LLM security system comprises: gathering a collection of historical user natural language utterances of the first user identifier; tokenizing the collection of historical natural language utterances to generate a plurality of sets of tokens; tagging tokens in the plurality of sets of tokens based on parts of speech and name recognition to obtain a plurality of tagged sets of tokens; independently processing, by the vector embedding model, the tagged sets of tokens to generate a plurality of sets of vectors embeddings; independently processing, by the sequential model, the plurality of sets of vector embeddings to generate a plurality of profile vectors; clustering the plurality of profile vectors into a plurality of clusters; and storing the plurality of clusters as a signature of the user identifier.

Clause 16. The system of any of clauses 9 to 15, wherein the LLM security system is further configured to: generating a sequence of target vectors comprising the first target vector from a sequence of online user prompts from the first user computing device, the sequence of online user prompts comprising the first online user prompt, wherein processing the first target vector by the anomaly detection model is performed by processing the sequence of target vectors to detect a pattern indicating that the user impersonation exists.

Clause 17. A method comprising: receiving, from a first user computing device, a first online user prompt to a large language model (LLM), the first online user prompt associated with a first user identifier; tokenizing the first online user prompt to generate a first target set of tokens; tagging each token in the first target set based on parts of speech to obtain a first tagged target set; processing, by a vector embedding model, the first tagged target set to generate a first plurality of vector embeddings; processing, by a sequential model, the first plurality of vector embeddings to generate a first target vector; processing, by a first anomaly detection model trained on a first signature of the first user identifier, the first target vector to detect whether user impersonation exists; and blocking, in real time with receiving the first online user prompt, access to the LLM by the first user computing device based on detecting that user impersonation exists.

Clause 18. The method of clause 17, wherein blocking access to the LLM stops a response from the LLM to the first online user prompt from being sent to the first user computing device.

Clause 19. The method of clause 17 or 18, wherein tagging each token in the first target set is further based on name recognition.

Clause 20. The method of clause 17, 18 or 19, further comprising: receiving, from a second user computing device, a second online user prompt to the LLM, the second online user prompt associated with a second user identifier; tokenizing the second online user prompt to generate a second target set of tokens; tagging each token in the second target set based on parts of speech to obtain a second tagged target set; processing, by the vector embedding model, the second tagged target set to generate a second plurality of vector embeddings; processing, by the sequential model, the second plurality of vector embeddings to generate a second target vector; processing, by a second anomaly detection model trained on a second signature of the second user identifier, the second target vector to detect whether user impersonation exists, wherein the second anomaly detection model is different from the first anomaly detection model; and allowing, in real time with receiving the second online user prompt, access to the LLM by the second user computing device based on detecting that user impersonation does not exist.

As used herein, the term "connected to" contemplates multiple meanings. A connection may be direct or indirect (*e.g*., through another component or network). A connection may be wired or wireless. A connection may be a temporary, permanent, or a semi-permanent communication channel between two entities.

The various descriptions of the figures may be combined and may include, or be included within, the features described in the other figures of the application. The various elements, systems, components, and steps shown in the figures may be omitted, repeated, combined, or altered as shown in the figures. Accordingly, the scope of the present disclosure should not be considered limited to the specific arrangements shown in the figures.

In the application, ordinal numbers (*e.g.,* first, second, third, *etc.*) may be used as an adjective for an element (*i.e.,* any noun in the application). The use of ordinal numbers is not to imply or create any particular ordering of the elements, nor to limit any element to being only a single element unless expressly disclosed, such as by the use of the terms "before", "after", "single", and other such terminology. Rather, ordinal numbers distinguish between the elements. By way of an example, a first element is distinct from a second element, and the first element may encompass more than one element and succeed (or precede) the second element in an ordering of elements.

Further, unless expressly stated otherwise, the conjunction "or" is an inclusive "or" and, as such, automatically includes the conjunction "and," unless expressly stated otherwise. Further, items joined by the conjunction "or" may include any combination of the items with any number of each item, unless expressly stated otherwise.

In the above description, numerous specific details are set forth in order to provide a more thorough understanding of the disclosure. However, it will be apparent to one of ordinary skill in the art that the technology may be practiced without these specific details. In other instances, well-known features have not been described in detail to avoid unnecessarily complicating the description. Further, other embodiments not explicitly described above can be devised which do not depart from the scope of the claims as disclosed herein. Accordingly, the scope should be limited only by the attached claims.

## Claims

1. A method comprising:
receiving, from a first user computing device, a first online user prompt to a large language model (LLM), the first online user prompt associated with a first user identifier;
tokenizing the first online user prompt to generate a first target set of tokens;
tagging each token in the first target set based on parts of speech to obtain a first tagged target set;
processing, by a vector embedding model, the first tagged target set to generate a first plurality of vector embeddings;
processing, by a sequential model, the first plurality of vector embeddings to generate a first target vector;
processing, by an anomaly detection model, the first target vector using a first signature of the first user identifier to detect whether user impersonation exists; and
blocking, in real time with receiving the first online user prompt, access to the LLM by the first user computing device based on detecting that user impersonation exists.

2. The method of claim 1, wherein blocking access to the LLM stops a response from the LLM to the first online user prompt from being sent to the first user computing device.

3. The method of claim 1 or 2, further comprising:
calculating, by the anomaly detection model, a vector distance to each of a plurality of clusters of profile vectors in the first signature, wherein the plurality of clusters of profile vectors is generated from a plurality of historical user utterances associated with the first user identifier; and
determining, by the anomaly detection model, that the user impersonation exists responsive to the vector distance being greater than a threshold.

4. The method of claim 1, 2 or 3, wherein tagging each token in the first target set is further based on name recognition.

5. The method of any preceding claim, further comprising:
receiving, from a second user computing device, a second online user prompt to the LLM, the second online user prompt associated with a second user identifier;
tokenizing the second online user prompt to generate a second target set of tokens;
tagging each token in the second target set based on parts of speech to obtain a second tagged target set;
processing, by the vector embedding model, the second tagged target set to generate a second plurality of vector embeddings;
processing, by the sequential model, the second plurality of vector embeddings to generate a second target vector;
processing, by the anomaly detection model, the second target vector using a second signature of the second user identifier to detect whether user impersonation exists; and
allowing, in real time with receiving the second online user prompt, access to the LLM by the second user computing device based on detecting that user impersonation does not exist.

6. The method of any preceding claim, further comprising:
obtaining a plurality of verified historical prompts of a plurality of users that are grouped by user to obtain a plurality of groups of historical prompts;
tokenizing the plurality of groups of historical prompts based on parts of speech to obtain a plurality of tagged groups of tokens;
independently process, by the vector embedding model, the plurality of tagged groups of tokens to generate a plurality of groups of vector embeddings;
independently process, by the sequential model, the plurality of groups of vector embeddings to generate a plurality of training profile vectors;
clustering the plurality of training profile vectors to generate a plurality of clusters;
generating a loss value based on a separation and an overlap of the plurality of clusters; and
updating the vector embedding model and the sequential model based on the loss value.

7. The method of any preceding claim, further comprising:
gathering a collection of historical user natural language utterances of the first user;
tokenizing the collection of historical natural language utterances to generate a plurality of sets of tokens;
tagging tokens in the plurality of sets of tokens based on parts of speech and name recognition to obtain a plurality of tagged sets of tokens;
independently processing, by the vector embedding model, the tagged sets of tokens to generate a plurality of sets of vectors embeddings;
independently processing, by the sequential model, the plurality of sets of vector embeddings to generate a plurality of profile vectors;
clustering the plurality of profile vectors into a plurality of clusters; and
storing the plurality of clusters as a signature of the user identifier.

8. The method of any preceding claim, further comprising:
generating a sequence of target vectors comprising the first target vector from a sequence of online user prompts from the first user computing device, the sequence of online user prompts comprising the first online user prompt,
wherein processing the first target vector by the anomaly detection model is performed by processing the sequence of target vectors to detect a pattern indicating that the user impersonation exists.

9. The method of any preceding claim, wherein to perform the processing, by the anomaly detection model, of a target vector using a signature of the user identifier, comprises the anomaly detection model having been trained on the signature of the user identifier.

10. A system comprising:
at least one computer processor;
an interface executing on the at least one computer processor and configured to receive, from a first user computing device, a first online user prompt to a large language model (LLM), the first online user prompt associated with a first user identifier; and
an LLM security system executing on the at least one computer processor and comprising:
a pattern analysis engine comprising:
a tokenizer configured to tokenize the first online user prompt to generate a first target set of tokens, and
a token tagger configured to tag each token in the first target set based on parts of speech to obtain a first tagged target set,
a profile creator comprising:
a vector embedding model configured to process the first tagged target set to generate a first plurality of vector embeddings, and
a sequential model configured to process the first plurality of vector embeddings to generate a first target vector, and
an anomaly detection model configured to process the first target vector using a first signature of the first user identifier to detect whether user impersonation exists, and
wherein the LLM security system is configured to block, in real time with receiving the first online user prompt, access to the LLM by the first user computing device based on detecting that user impersonation exists.

11. The system of claim 10, wherein blocking access to the LLM stops a response from the LLM to the first online user prompt from being sent to the first user computing device.

12. The system of claim 10 or 11, wherein the anomaly detection model is further configured to:
calculate a vector distance to each of a plurality of clusters of profile vectors in the first signature, wherein the plurality of clusters of profile vectors is generated from a plurality of historical user utterances associated with the first user identifier; and
determine that the user impersonation exists responsive to the vector distance being greater than a threshold.

13. The system of claim 10, 11 or 12, wherein tagging each token in the first target set is further based on name recognition.

14. The system of any of claims 10 to 13, further configured to perform functionality corresponding to the steps of any of claims 5 to 9.

15. A computer readable medium comprising instructions that, when executed by bone or more processors of a computing system, cause the computing system to perform the method of any of claims 1 to 9.
